# EUROPÄISCHE PATENTANMELDUNG

(11) **EP 1 457 939 A1**
(43) Veröffentlichungstag der Anmeldung: **15.09.2004**
(21) Anmeldenummer: 03005642.8
(22) Anmeldetag: 12.03.2003
(51) Int. Cl.: G07F 19/00, G06F 17/60, G07F 7/10, H04L 12/56

(54) **Verfahren zur Übertragung von Zahlungsdienstinformationen**

(71) Anmelder: SIEMENS AKTIENGESELLSCHAFT, 80333 München (DE)
(72) Erfinder: Kaltt, Uwe, 0451 Oslo (NO); Ryll, Thomas, 10823 Berlin (DE)

(57) **Zusammenfassung**

Die Erfindung betrifft ein Verfahren und ein System zur Übertragung von Zahlungsdienstinformationen zwischen einem Zahlungsdienste bereitsteilenden System (CS) eines Dienstanbieters in einem ersten Kommunikationsnetz und einem weiteren Zahlungsdienste bereitstellenden System (CS) eines zweiten Dienstanbieters in einem zweiten Kommunikationsnetz, wobei für die Übertragung zwischen den genannten Systemen Mittel zum geregelten Austausch von netzzugriffsbezogenen und/oder dateibezogenen Informationen verwendet werden. Bevorzugte Mittel zum Informationsaustausch sind Protokolle wie z.B. FTP, FTAM, RADIUS und DIAMETER.

## Beschreibung

Die Erfindung betrifft ein Verfahren zur Übertragung von Zahlungsdienstinformationen zwischen einem Zahlungsdienste bereitstellenden System eines Dienstanbieters in einem ersten Kommunikationsnetz und einem weiteren, Zahlungsdienste bereitstellenden System eines zweiten Dienstanbieters in einem zweiten Kommunikationsnetz.

### Technischer Hintergrund der Erfindung

Die Zahlungsdienstinformationen betreffen insbesondere Kaufvorgänge, bei denen in einem Telekommunikationsnetz drei Rollen beteiligt sind:
- der Anbieter einer Dienstleistung oder eines Produktes, der dafür ein Entgelt verlangt (auch Merchant genannt),
- der Kunde oder Konsument der angebotenen Dienstleistung oder des Produktes, der dafür ein Entgelt leisten will (auch Consumer genannt), und
- der Zahlungsdienst-Anbieter (Payment Service Provider, PSP), der den Zahlungsverkehr zwischen Anbieter und Kunden bereitstellt bzw. abwickelt.

In der klassischen Telekommunikationswelt tritt der Netzbetreiber (Network Operator) sowohl als Anbieter als auch als Zahlungsdienst-Anbieter auf. Er bietet Telefoniedienste seinen Teilnehmern (Kunden) an und rechnet sie über die existierenden Buchungs- bzw. Billingsysteme (Telefonrechnung oder Abbuchung vom Prepaid-Guthabenkonto) ab.

Mit der Öffnung der Telekommunikationsnetze (z. B. durch Parlay, http://www.parlay.org/) und innerhalb öffentlicher Datennetze (z. B. Internet) treten auch Dritte als Anbieter auf, die eigene Dienstleistungen anbieten. Z.B. sind die im Internet bereits weit verbreiteten "Content Provider" zu erwähnen, die Informationen ("Inhalte") gegen Bezahlung anbieten, oder auch Online-Shops. Diese haben in der Regel jedoch keine eigenen Abrechnungssysteme. Die benötigten Abrechnungsdienstleistungen werden vom Zahlungsdienst-Anbieter dem Anbieter und dem Kunden angeboten.

Wenn sich der Kunde und der Anbieter beim gleichen Zahlungsdienst-Anbieter registrieren, so kann der Kauf einer Dienstleistung oder eines Produkts vom Zahlungsdienst-Anbieter für den Anbieter abgerechnet werden. Sobald aber der Kunde bei einem Anbieter den Kauf einer Dienstleistung oder einer Ware tätigen will, die nicht in demselben Land sein Geschäft angemeldet hat, sind in der Regel auch zwei Zahlungsdienst-Anbieter beteiligt. Der erste Zahlungsdienst-Anbieter bedient den Kunden in dessen ersten Heimatland (Konsumenten-PSP), der andere den Anbieter in dem zweiten Heimatland (Anbieter PSP). Die Auftrennung in 2 PSPs ist hier beispielhaft auf die Trennung durch Ländergrenzen abgebildet, kann aber ebenso gut in einem Land passieren. Zum Beispiel kann es zu einem Kaufvorgang zwischen einem Merchant und einem Kunden kommen, wobei der Merchant bei einem bestimmten Netzbetreiber registriert ist, während der Kunde bei einem anderen Netzbetreiber Kunde ist.

Für solche Szenarien, bei denen mehr als ein PSP dem Merchant und den Kunden bedienen, fehlen derzeit Lösungen zum Abwickeln von Zahlungsdienstinformationen (Payments).

Die Aufgabe der Erfindung ist es, ein Verfahren und ein System zur Übertragung von Zahlungsdienstinformationen bereitzustellen, das insbesondere dazu geeignet ist, eine effiziente und einfach implementierbare Abwicklung von Zahlungsdiensten zwischen zwei unterschiedlichen Zahlungsdienst-Anbietern zu ermöglichen.

### Darstellung der Erfindung

Diese Aufgabe wird durch ein in Anspruch 1 angegebenes Verfahren sowie einer Vorrichtung gemäß Anspruch 13 gelöst. Vorteilhafte Ausgestaltungen der Erfindung sind in den weiteren Patentansprüchen gekennzeichnet.

Ein wesentlicher Aspekt der Erfindung besteht darin, dass zur Übertragung von Zahlungsdienstinformationen zwischen einem Zahlungsdienste bereitstellenden System eines Dienstanbieters in einem ersten Kommunikationsnetz und einem weiteren Zahlungsdienste bereitstellenden System eines zweiten Dienstanbieters in einem zweiten Kommunikationsnetz, wobei für die Übertragung zwischen den genannten Systemen Mittel zum geregelten Austausch von netzzugriffsbezogenen und/oder dateibezogenen Informationen verwendet werden.

Der Netzbetreiber des einen Kommunikationsnetzes muss also zum Abwickeln der Zahlungsdienstinformationen bzw. Payments, die ihn über einen anderen Netzbetreiber eines zweiten Kommunikationsnetzes erreichen, eine Schnittstelle für alle anderen PSPs anbieten, über die diese mit ihm in Kontakt treten können. Diese Payments umfassen unter anderem die Bezahlung des Kunden und deren Verbuchung.

Es gibt mehrere Varianten, auf welche Weise die Kommunikation zwischen den beiden PSPs erfolgt:
■ über das Protokoll FTP (File Transfer Protocol), das im Internet sehr verbreitet ist und häufig im Zusammenhang von Datei-Übertragungen Verwendung findet oder
■ über das Protokoll File Transfer, Access, and Management (FTAM), das in Telekommunikationsnetzen sehr verbreitet ist und häufig im Zusammenhang von Datei-Übertragungen Verwendung findet.

Der Transport der FTP-Dateien erfolgt hierbei über TCP (Transaction Control Protocol), das nach dem OSI-Schichten-Modell über dem IP-Internet Protocol angesiedelt ist. FTP ist im Request for Cömments (RFC) 959 der Internet Engineering Task Force (IETF) aus dem Jahr 1985 beschrieben.

FTAM ist im Standard ISO 8571 der International Organization for Standardization (ISO) aus dem Jahr 1995 beschrieben. FTAM wird ebenfalls über TCP übertragen unter Nutzung des in RFC 1006 beschriebenen Konvergenz-Protokolls. (RFC 1006: ISO Transport Service on top of the TCP, 1987).

In beiden Fällen FTP/FTAM erfolgt die Verarbeitung der versendeten Dateien erfindungsgemäß in Echtzeit, d.h. innerhalb eines eng umrissenen Zeitrahmens.
■ Die Kommunikation zwischen den beiden PSP's erfolgt hierbei über das Protokoll RADIUS (Remote Authentication Dial In User Service), das im Internet sehr verbreitet ist und häufig im Zusammenhang von Einwahlvorgängen eines Nutzers (NAS - Network Access Service) Verwendung findet.

Der Transport der Nachrichten erfolgt hierbei über UDP (User Datagram Protocol), das nach dem OSI-Schichten-Modell über dem IP-Internet Protocol angesiedelt ist. RADIUS ist im RFC 2865 aus dem Jahr 2000 beschrieben. Ergänzend seien noch die RFC's 2139 und 2869 genannt, die RADIUS Accounting bzw. Radius Extensions beschreiben.
■ Die Kommunikation zwischen den beiden PSP's erfolgt hierbei über das Protokoll DIAMETER, das als der Nachfolger von RADIUS zur Zeit von der AAA Working Group innerhalb der IETF - Internet Engineering Task Force definiert wird (zu finden z.B.
   http://www.diameter.org/drafts/latest/draft-ietf-aaa-diameter-11.txt. Ergänzend soll hier auch die sog. Credit Control Extension von DIAMETER genannt werden, die Grundzüge einer Echtzeit-Gebührenerfassung via DIAMETER definiert (http://www.ietf.org/internet-drafts/draft-hakala-diameter-credit-control-04.txt).

Der Transport der Nachrichten erfolgt hierbei über TCP (Transport Control Protocol), das nach dem OSI-Schichten-Modell über dem IP - Internet Protocol angesiedelt ist.

Die vorliegende Erfindung zeichnet sich durch folgende Vorteile aus:
■ Die genannten Protokolle FTP, RADIUS und DIAMETER liegen als Internet-Standard der IETF (International Engineering Task Force) vor.
■ Das Protokoll FTAM liegt als Standard der ISO (International Organization for Standardization) vor.
■ Weite Verbreitung von FTP, FTAM und RADIUS im Internet bzw. im Telekommunikationsbereich.
■ Leichte Implementierungsmöglichkeit.
■ FTP, FTAM sowie DIAMETER nutzen die Transaktionssicherheit von TCP aus.
■ DIAMETER weist eine Ausfallsicherheit durch ein sogenanntes Fail-Over-Konzept auf.
■ Einsatz von XML (eXtensible Markup Language, XML ist eine Metasprache für das Definieren von Dokumenttypen, liefert also die Regeln, die beim Definieren von Dokumenttypen angewendet werden. Datenbeschreibungen beruhen also auf Dokumenttypen (DTDs - Document Type Definitions), die sich gewissen Regeln zu unterwerfen haben. Beschrieben ist XML bei dem World Wide Web Consortium - http://www.w3.org/) basierter Datenbeschreibung.

DIAMETER wird auch im Rahmen von UMTS (Universal Mobile Telecommunication System) Release 6 in einem anderen Kontext zum Einsatz kommen: 3GPP TS 32.225 "Charging Data Description for the IP Multimedia Subsystem".

Die Vorteile weiterer Ausgestaltungen der Erfindung ergeben sich aus den nachstehend beschriebenen, anhand einer Zeichnung erläuterten Ausführungsformen.

Die Zeichnung zeigt:

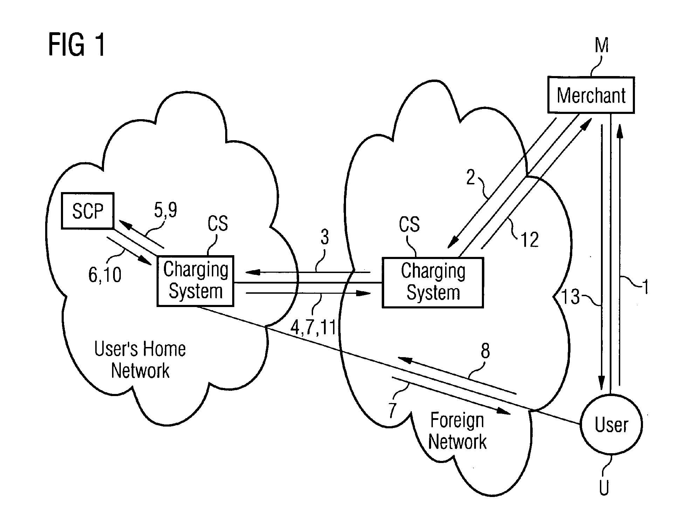

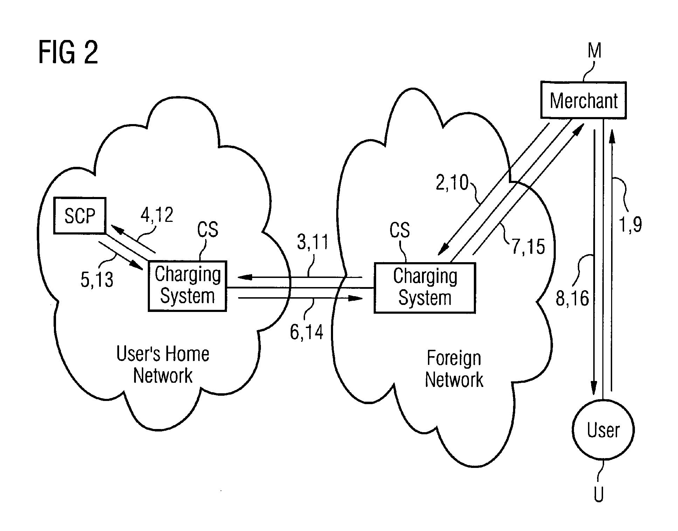

In den Figuren 1 und 2 jeweils schematisch die Struktur der genannten Kommunikationsnetze, auf das das erfindungsgemäße Verfahren anwendbar ist. Auch werden die erfindungsgemäßen Vorrichtungen in der Figur angedeutet.

### Beschreibung der bevorzugten Ausführungsformen

Die Figuren 1 und 2 zeigen schematisch zwei Kommunikationsnetze, ein erstes Kommunikationsnetz, bei dessen Netzbetreiber der angedeutete Teilnehmer U Kunde ist, sowie ein zweites Kommunikationsnetz, bei dem der angedeutete Merchant M dem Teilnehmer U Produkte/Dienstleistungen anbietet. Des weiteren werden in den jeweiligen Kommunikationsnetzen Buchungssysteme CS gezeigt, die die Abwicklung der Zahlungsdienstinformationen übernehmen. Mit dem Buchungssystem CS kann ein weiteres System als sogenannter Service Control Point SCP, ein Rechner wie er in Zusammenhang mit Intelligenten Netzen bekannt ist, in Verbindung stehen. Hierbei sind die genannten Systeme derart ausgebildet, dass sie für die Anwendung des erfindungsgemäßen Verfahrens geeignet sind.

Die beispielhaften Verfahrensschritte sind mit entsprechenden Nummern gekennzeichnet, wobei in Figur 1 gegenüber Figur 2 weitere Verfahrensschritte zwischen dem Buchungssystem CS des ersten Kommunikationsnetzes und dem Teilnehmer U dargestellt sind.

Hinsichtlich des Verfahrensablaufs unter Verwendung der Protokolle FTP bzw. FTAM sind die in Figur 1 gezeigten Verfahrensschritte vorstellbar:
- Step 1:: Der User=Consumer möchte bei dem Merchant einen Kaufvorgang tätigen, z.B. den Download eines kostenpflichtigen MP3-Files starten.
- Step 2:: Merchant wendet sich aufgrund eines bestehenden Vertragsverhältnisses an seinen Netzbetreiber (Foreign Network für den Consumer=User) und leitet diesen Zahlungsvorgang weiter.
- Step 3:: Das Buchungssystem (Charging System) im Foreign Network erkennt, dass es sich um einen für ihn fremden Kunden des Netzbetreibers (Network Operator) des User's Home Network handelt und leitet den Zahlungsvorgang weiter. Dazu leitet das eine dem anderen Charging System eine Datei entsprechenden Inhalts über FTP zu. Im speziellen wird das FTP-Kommando "STORE" dem Charging System im User's Home Network übermittelt. Daraufhin wird über die FTP-Datenverbindung die Datei dem Charging System im User's Home Network übermittelt.
- Step 4:: Das Charging System des User's Home Network empfängt das Kommando und die ankommende Datei. Der Empfang wird durch ein sog. "positive preliminary reply" mit der FTP-Nachricht 100_OK bestätigt.
- Step 5:: Die Verarbeitung des Dateiinhaltes durch das Charging System des User's Home Network erfolgt in Echtzeit (sog. Hot Billing). Nach Erkennen, dass es sich um einen Kunden des User's Home Network handelt wird das Charging System des User's Home Network feststellen, ob es sich um einen Post-paid oder Pre-paid Consumer handelt (nicht eingezeichnet). Hier wird dann ein Request an das PrepaidSystem SCP gestellt, um den entsprechenden Betrag dem Konto des Consumers zunächst für eine Reservierung anzulasten. Der Betrag kann auch noch Aufschläge wegen des Inter-PSP Payments enthalten (z.B. um Währungsverlusten vorzubeugen).
- Step 6:: Bei erfolgreicher Buchung meldet der SCP dies dem Charging System zurück.
- Step 7:: Nun wird zunächst der User über den finalen Preis informiert, der alle eventuell zusätzlichen Gebühren enthält. Als Transportmedium kann z.B. USSD verwendet werden (Unstructured Supplementary Service Data - USSD Zeichenfolgen werden ähnlich den Kurznachrichten nach dem Short Message Service SMS übertragen und am Endgerät angezeigt. Endgeräteseitig gibt es als Unterschied zu SMS heute meist weniger Funktionalität, so kann man keinen Nachrichtenspeicher, kann keine Adressbucheinträge nutzen [der Empfänger ist das Telekommunikationsnetz selbst], usw.).
- Step 8:: Der User gibt sein Einverständnis zur Zahlung des angezeigten Preises für den Download, z.B. ebenfalls via USSD.
- Step 9:: Der SCP bekommt vom Charging System angezeigt, dass er die Reservierung abzuschließen hat (sog. "Capture").
- Step 10:: Nach erfolgreichem Abschluss der Reservierung wird dies dem Charging System gemeldet.
- Step 11:: Mit einer entsprechenden abschließenden FTP-Nachricht "200_OK", wird die erfolgreiche Zahlung an das Charging System des Foreign Network Operators gemeldet.
- Step 12:: Das Charging System des Foreign Network Operators meldet dem Merchant, dass die Zahlung erfolgreich war und dieser die Dienstleistung ausliefern kann.
- Step 13:: Der Service wird ausgeliefert, hier wird also dem Consumer ermöglicht, das MP3 herunterzuladen.

Hinsichtlich des Verfahrensablaufs unter Verwendung der Protokolle RADIUS bzw. DIAMETER sind die in Figur 2 gezeigten Verfahrensschritte vorstellbar:
- Step 1:: Der User=Consumer möchte bei dem Merchant einen Kaufvorgang tätigen, z.B. den Download eines kostenpflichtigen MP3-Files starten.
- Step 2:: Merchant wendet sich aufgrund eines bestehenden Vertragsverhältnisses an seinen Netzbetreiber (Foreign Network für den Consumer=User) und leitet diesen Zahlungsvorgang weiter. Es handelt sich hierbei erst einmal um eine Reservierungsanfrage, da der User später noch sein finales Einverständnis geben muss.
- Step 3:: Das Buchungssystem (Charging System) im Foreign Network erkennt, dass es sich um einen für ihn fremden Kunden des Netzbetreibers (Network Operator) des User's Home Network handelt und leitet den Zahlungsvorgang weiter. Dazu kommuniziert das eine mit dem anderen Charging System über RADIUS und im speziellen über die Operation "Accounting Request (Start)" mit dem Charging System im User's Home Network.
- Step 4:: Nach Erkennen, dass es sich um einen Kunden des User's Home Network handelt, wird das Charging System des User's Home Network feststellen, ob es sich um einen Post-paid oder Pre-paid Consumer handelt (nicht eingezeichnet). Hier wird dann ein Request an das Prepaid-System SCP gestellt, um den entsprechenden Betrag dem Konto des Consumers für eine Reservierung anzulasten. Der Betrag kann auch noch Aufschläge wegen des Inter-PSP Payments enthalten (z.B. um Währungsverlusten vorzubeugen).
- Step 5:: Bei erfolgreicher Buchung meldet der SCP dies dem Charging System zurück.
- Step 6:: Mit einer entsprechenden RADIUS Nachricht "Accounting-Response (Start)" wird die erfolgreiche Reservierung an das Charging System des Foreign Network Operators gemeldet.
- Step 7:: Der Merchant bekommt die Nachricht, dass die Reservierung erfolgreich war und er eine Zahlungsgarantie des Foreign Network Operators = Merchant PSP hat, sobald der User sein Einverständnis gegeben hat.
- Step 8:: Der User wird über den finalen Preis informiert, der alle eventuell zusätzlichen Gebühren enthält.
- Step 9:: Der User gibt sein Einverständnis zur Zahlung des angezeigten Preises für den Download.
- Step 10:: Der Merchant wendet sich mit dem Zahlungseinverständnis an seinen PSP.
- Step 11:: Das Charging System des Foreign Network Operators benutzt die RADIUS Operation "Accounting-Request (Stop)", um dem Charging System des Home Network Operators anzuzeigen, dass das Einverständnis des Users vorliegt und die Reservierung erfolgreich abgeschlossen werden kann.
- Step 12:: Der SCP bekommt vom Charging System angezeigt, dass er die Reservierung abzuschließen hat.
- Step 13:: Nach erfolgreichem Abschluss der Reservierung wird dies dem Charging System gemeldet.
- Step 14:: Das Charging System des User's Home Network meldet dem Charging System des Foreign Networks mit der RADIUS Operation "Accounting-Response (Stop)", dass die Reservierung erfolgreich abgeschlossen wurde.
- Step 15:: Das Charging System des Foreign Network Operators meldet dem Merchant, dass die Zahlung erfolgreich war und dieser die Dienstleistung ausliefern kann.
- Step 16:: Der Service wird ausgeliefert, hier wird also dem Consumer ermöglicht, das MP3 herunterzuladen.

## Patentansprüche

1. Verfahren zur Übertragung von Zahlungsdienstinformationen zwischen einem Zahlungsdienste bereitstellenden System (CS) eines Dienstanbieters in einem ersten Kommunikationsnetz und einem weiteren, Zahlungsdienste bereitstellenden System (CS) eines zweiten Dienstanbieters in einem zweiten Kommunikationsnetz, wobei für die Übertragung zwischen den genannten Systemen Mittel zum geregelten Austausch von netzzugriffsbezogenen und/oder dateibezogenen Informationen verwendet werden.

2. Verfahren nach Anspruch 1, ***dadurch gekennzeichnet, dass*** ein eine Zahlungsdienstinformation auslösender Teilnehmer (U) dem ersten Kommunikationsnetz zugeordnet ist und ein die Zahlungsdienstinformation verarbeitendes System (SCP) dem zweiten Kommunikationsnetz zugeordnet ist.

3. Verfahren nach Anspruch 1 oder 2, ***dadurch gekennzeichnet, dass*** das erste und das zweite Kommunikationsnetz von zwei unterschiedlichen Netzbetreibern zur Verfügung gestellt wird.

4. Verfahren nach einem der vorhergehenden Ansprüche, ***dadurch gekennzeichnet, dass*** für die Übertragung zwischen den genannten Systemen (CS) das dateibezogene, standardisierte File-Transfer-Protokoll FTP verwendet wird.

5. Verfahren nach einem der Ansprüche 1 bis 3, ***dadurch* ge*kennzeichnet, dass*** für die Übertragung zwischen den genannten Systemen (CS) das datei- und netzzugriffsbezogene, standardisierte File-Transfer/Access/Management-Protokoll FTAM verwendet wird.

6. Verfahren nach Anspruch 4 oder 5, ***dadurch gekennzeichnet, dass*** mit einer Datei, die zu dem ein die Zahlungsdienstinformation verarbeitendes System (SCP) aufweisenden Kommunikationsnetz übertragen und dort verarbeitet wird, Zahlungsdienstanweisungen ausgeführt und gegebenenfalls bestätigt werden.

7. Verfahren nach Anspruch 6, ***dadurch gekennzeichnet, dass*** die zu verarbeitende Zahlungsdienstinformation vom verarbeitenden System einem die Zahlungsdienstinformation auslösenden Teilnehmer (U) übermittelt werden und der Teilnehmer diese gegebenenfalls bestätigt.

8. Verfahren nach Anspruch 7, ***dadurch gekennzeichnet, dass*** die Übermittlung der zu verarbeitenden Zahlungsdienstinformation mit Hilfe des Übertragungsmittels USSD (= Untructured Supplementary Service Data) durchgeführt wird.

9. Verfahren nach einem der Ansprüche 1 bis 3, ***dadurch gekennzeichnet, dass*** für die Übertragung zwischen den genannten Systemen (CS) das netzzugriffsbezogenen, standardisierte Remote-Authentication-Dial-In-User-Service-Protokoll RADIUS verwendet wird.

10. Verfahren nach einem der Ansprüche 1 bis 3, ***dadurch* ge*kennzeichnet, dass*** für die Übertragung zwischen den genannten Systemen das netzzugriffsbezogene, standardisierte Protokoll DIAMETER verwendet wird.

11. Verfahren nach Anspruch 9 oder 10, ***dadurch gekennzeichnet, dass*** mit einem Befehl, der zu dem ein die Zahlungsdienstinformation verarbeitendes System aufweisenden Kommunikationsnetz übertragen wird, Zahlungsdienstanweisungen ausgeführt und gegebenenfalls bestätigt werden.

12. Verfahren nach Anspruch 11, ***dadurch gekennzeichnet, dass*** die zu verarbeitende Zahlungsdienstinformation vom verarbeitenden System (SCP) einem die Zahlungsdienstinformation auslösenden Teilnehmer (U) übermittelt werden und der Teilnehmer diese gegebenenfalls bestätigt.

13. System zur Bereitstellung von Zahlungsdiensten, das zur Durchführung des Verfahrens nach einem der vorhergehenden Ansprüche ausgebildet ist.
